# EUROPEAN PATENT APPLICATION

(11) **EP 1 814 030 A2**
(43) Date of publication of application: **01.08.2007**
(21) Application number: 06125551.9
(22) Date of filing: 07.12.2006
(51) Int. Cl.: G06F 11/07

(54) **Electronic device and control method thereof**

(30) Priority: 10.12.2005 KR 20050121218
(71) Applicant: Samsung Electronics Co., Ltd., Suwon-si 442-742 Gyeonggi-Do (KR)
(72) Inventor: Kwon, Hyok-sang, Yeongtong-gu, Suwon-si, Gyeonggi-do (KR)
(74) Representative: Robinson, Ian Michael

(57) **Abstract**

An electronic device (100) comprises a memory unit (140) and a controller (150). The memory unit (140) is operable to store data and accessibility information that shows whether the data is accessible. The controller (150) is operable to determine whether the accessibility information is stored in the memory unit (140) when having access to the data. The controller (150) is further operable to access the data when the accessibility information is stored in the memory unit (140).

## Description

The present invention relates to an electronic device and a control method thereof, and more particularly, to an electronic device and a control method thereof, in which an operational stability is improved.

An electronic device like a digital television includes a memory unit to store data necessary for operation of the device. The memory unit can be implemented using a flash memory. The memory unit stores the data according to predetermined formats. The format of stored data (hereinafter called a data format) includes a file system.

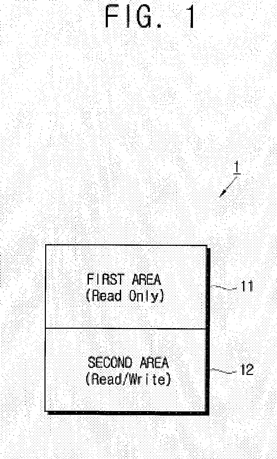

Figure 1 shows a structure of a memory unit 1 included in a conventional electronic device. The memory unit 1 has a first area 11 and a second area 12 in which data is stored, respectively. The first area 11 is only readable, but the second area 12 is both readable and writable. For example, the first area 11 stores a boot loader enabling an operating system of the electronic device to be loaded, a kernel that is the essential center of the operating system, an application program necessary for operating the electronic device, etc. For example, the operating system may be Linux^{™}. On the other hand, the second area 12 can store data associated with operating the operating system, files associated with the application program, etc.

In the case that the memory unit 1 is a NAND flash memory, data reading and/or writing can be performed according to a file system such as compressed read only memory file system (CRAMFS) and Robust file allocation table file system (RFS^{™}) in the first area 11 and the second area 12, respectively.

The conventional electronic device including the memory unit 1 operates as follow. Firstly, when the conventional electronic device is powered on, the boot loader is operated. The boot loader initializes hardware components of the electronic device and loads the kernel of the operating system. Next, the boot loader operates a root file system. The root file system is a basic file system having the operating system file necessary for operating the operating system. For example, in the case that the electronic device is a TV, an application program is executed to tune video signals, processing the video signals, displaying an image, etc.

In this case, for execution of this application program, data stored in the second area 12 may be accessed. As described above, data is stored and accessed as a file in the second area 12 of the memory unit 1 according to a predetermined file system. However, for some reason, an error may be generated in the file system of the second area 12 and it may be impossible to access the file which has been stored in the second area 12. In this case, the operating system has a problem of continuously attempting to access the file which has proved to be impossible to access. Consequently, the whole operation of the electronic device is paralyzed.

An aim of the present invention is to provide an electronic device and a control method thereof, which is improved in the stability of operation.

According to the present invention there is provided an apparatus and method as set forth in the appended claims. Preferred features of the invention will be apparent from the dependent claims, and the description which follows.

In one aspect of the present invention there is provided an electronic device comprising a memory unit and a controller. The memory unit is operable to store data and accessibility information that shows whether the data is accessible. The controller is operable to determine whether the accessibility information is stored in the memory unit when having access to the data. The controller is further operable to access the data when the accessibility information is stored in the memory unit.

According to the embodiment of the present invention, the data is stored as a file in the memory unit according to a file system.

According to the embodiment of the present invention, the accessibility information comprises a metadata file of the file system.

According to the embodiment of the present invention, the controller performs a file format corresponding to the file system for the memory unit when the memory unit has no accessibility information.

According to the embodiment of the present invention, the memory unit comprises a NAND flash memory.

According to the embodiment of the present invention, the memory unit, comprises a readable and writable area in which the data and the accessibility information are stored.

According to the embodiment of the present invention, the electronic device further comprises a video processor to process video signals.

The foregoing and/or other aspects of the present invention are also achieved by providing an electronic device with a program storage unit, a file storage unit and a controller. The storage unit is operable to store an application program. The file storage unit has a file system area in which a file associated with the application program is stored. The controller is operable to determine whether the file system area is mounted to be accessible at the time of executing the application program. The controller is further operable to execute the application program when the file system area has been mounted.

According to the embodiment of the present invention, the file storage area is operable to store a metadata file of the file system area. The controller is operable to determine whether the metadata file exists in the file storage area, and further operable to execute the application program when the metadata file exists.

According to the embodiment of the present invention, the controller performs a file format for the file system area when the file system area is not mounted or when the metadata file does not exist in the file storage area.

According to the embodiment of the present invention, the file storage unit comprises a NAND flash memory.

According to the embodiment of the present invention, the file system area is readable and writable.

According to the embodiment of the present invention, the electronic device further comprises a video processor to process video signals.

The foregoing and/or other aspects of the present invention are also achieved by providing a method for controlling an electronic device. The device includes a memory unit to store predetermined data and accessibility information which shows whether the data is accessible. The control method comprises determining whether the accessibility information exists in the memory unit at the time of accessing the data and accessing the data in the memory unit.

According to the embodiment of the present invention, the data is stored as a file in the memory unit according to a file system.

According to the embodiment of the present invention, the accessibility information comprises a metadata file of the file system.

According to the embodiment of the present invention, the control method further comprises performing a file format corresponding to the file system for the memory unit when the accessibility information does not exist in the memory unit.

According to the embodiment of the present invention, the memory unit comprises a NAND flash memory.

According to the embodiment of the present invention, the memory unit comprises a readable and writable area in which the data and the accessibility information are stored.

According to the embodiment of the present invention, the control method further comprises processing video signals.

The foregoing and/or other aspects of the present invention are also achieved by providing a method of controlling an electronic device. The device includes a program storage unit and a file storage unit. The program storage unit is operable to store a predetermined application program. The file storage unit has a file system area to store a file associated with the application program. The method comprises determining whether the file system area is mounted to be accessible. The application program is executed when the file system area has been mounted.

According to the embodiment of the present invention, the file storing area stores a metadata file of the file system area, the method further comprises determining whether the metadata file exists in the file storage unit. The application program is executed when the metadata file is determined to exist.

According to the embodiment of the present invention, the executing the application program comprises performing a file format for the file system area when the file system area has not been mounted or the metadata file does not exist in the file storage area.

According to the embodiment of the present invention, the file storage unit comprises a NAND flash memory.

According to the embodiment of the present invention, the file system area is readable and writable.

According to the embodiment of the present invention, the control method further comprises processing video signals.

The invention will become more apparent by describing in detail examples and embodiments thereof with reference to the attached drawings in which:
Figure 1 shows a structure of a memory unit included in a conventional electronic device;
Figure 2 is a block diagram showing a configuration of an electronic device according to an embodiment of the present invention; and
Figure 3 is a flowchart view illustrating a control method of the electronic device according to an embodiment of the present invention.

Hereinbelow, an electronic device and a control method thereof according to an exemplary embodiment of the present invention will be described with reference to the accompanying drawings.

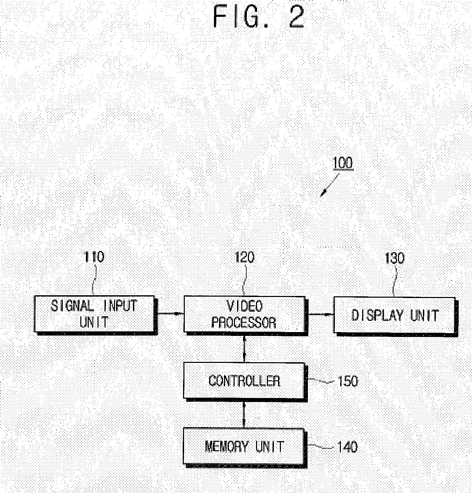

Figure 2 is a block diagram showing a configuration of an electronic device 100 according to an embodiment of the present invention. The electronic device 100 of this embodiment may be a digital television. The electronic device 100 includes a signal input unit 110, a video processor 120, a display unit 130, a memory unit 140 and a controller 150.

The signal input unit 110 receives video signals. For example, these signals could include at least one of aerial broadcasting signals, cable broadcasting signals, satellite broadcasting signals, etc., or video signals. These signals, for example, are input from external video signal sources such as a video cassette recorder (VCR), digital versatile disc (DVD), a personal computer (PC), etc. Under control of the controller 150, the signal input unit 110 is tuned to a video signal corresponding to a channel selected by a user. Alternately the input unit receives the video signals from a video signal source which is chosen by a user.

The video processor 120 processes the video signal so that the display unit 130 can display an image based on the video signal input from the signal input unit 110. For example, the video processor 120 can perform decoding to extract image information from the input video signal. Further it can perform scaling to regulate the resolution of the decoded video signal according to the characteristic of the display unit 130 and the setup of a user. Still further, it can perform picture enhancement to enhance the quality of the video signal, and so on. The video processor 120 may perform the image processing according to the characteristics of the input video signal and the display unit 130.

The display unit 130 displays the image based on the video signal processed by the video processor 120. The display unit 130 can be implemented in the form of a cathode ray tube (CRT), a liquid crystal display (LCD), a plasma display panel (PDP), a digital light processing (DLP), an organic light-emitting diode (OLED), a surface-conduction electron-emitter Display(SED), a field emission display (FED), etc.

The memory unit 140 stores data according to predetermined formats. In this embodiment, the memory unit 140 stores the data in the form of a file according to a predetermined file system. The memory unit 140 can be implemented by a NAND flash memory. The memory unit 140 has the same structure as that of the memory unit 1 of Figure 1. That is, the memory unit 140 has a first area 11 and a second area 12. The first area 11 is only readable, but the second area 12 is both readable and writable. Here, data reading and/or writing can be performed according to file systems such as compressed read only memory file system (CRAMFS) and Robust file allocation table file system(RFS^{™}) in the first area 11 and the second area 12, respectively. The second area 12 of this embodiment is used as an example of a "file system area."

The first area 11 stores a boot loader enabling an operating system of the electronic device to be loaded; a kernel that is the essential center of the operating system; an application program necessary for controlling operations of the signal input unit 110, the video processor 120 and the display unit 130; etc. In an exemplary embodiment, the operating system may be the Linux^{™}. The first area 11 of this embodiment is used as an example of a "program storing part." On the other hand, the second area 12 can store data associated with operating the operating system, files associated with the application program, etc. Further, the second area 12 of this preferred embodiment is used as an example of a "file storing part."

Moreover, the second area 12 stores accessibility information that shows whether the data stored therein is accessible or not. For example, the accessibility information may be a metadata file corresponding to the file system of the second area 12. In the case that the file system of the second area 12 is the "RFS^{™}", the metadata file thereof may be "$RFS.LO$." The presence of the metadata file means that the file system of the second area 12 has no error. As a result, the system can access data (or a file) which is stored in the second area 12 without encountering any problems.

The controller 150 provides overall control to the electronic device 100. When the electronic device 100 is turned on, the controller 150 operates the operating system. When the operating system is operated, the controller 150 determines whether or not the data stored in the second area 12 of the memory unit 140 is acceptable.

In this case, the controller 150 can check whether or not the second area 12 of the memory unit 140 is mounted. That is, the controller 150 controls a physical file system area of the memory unit 140 to be accessible through the operating system by a user. For example, in the case that the operating system is Linux, the controller 150 can check whether or not the second area 12 is mounted by a command, for example, "mount." When the "mount" command succeeds, the controller 150 determines that the file system of the second area 12 has normally operated and thus the second area 12 has been properly mounted. When the "mount" command fails, the controller 150 determines that a problem has occurred in the file system of the second area 12 and it is impossible to access the data (or the file) which is stored in the second area 12.

In the meantime, in order to check the second area 12 of the memory unit 140, the controller 150 can check whether or not the accessibility information is stored in the second area 12 of the memory unit 140. When the accessibility information is stored in the second area 12 of the memory unit 140, the controller 150 starts to access the data stored in the second area 12 of the memory unit 140. That is, when it is determined that data stored in the second area 12 of the memory unit 140 is accessible, the controller 150 executes an application program necessary for controlling the signal input unit 110, the video processor 120 and the display unit 130 to operate, respectively.

When it is determined that the second area 12 of the memory unit 140 is not mounted or the accessibility information does not exist in the second area 12 of the memory unit 140, the controller 150 performs a file format corresponding to the file system for the second area 12 of the memory unit 140. Through the file format, the operation of the electronic device 100 can be prevented from being paralyzed in the case that the stored file is not accessible due to the problem of the file system,.

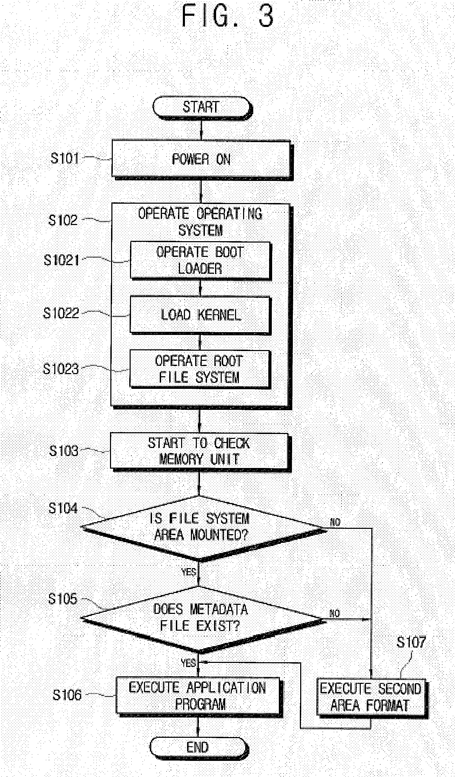

Figure 3 is a flow chart showing an example of a method for controlling the electronic device 100 according to the present embodiment. Firstly, when the electronic device 100 is turned on (S101), the controller 150 operates the operating system of the electronic device 100 (S102). The operational steps of the operating system are as follows.

Firstly, the controller 150 operates the boot loader stored in the first area 11 of the memory unit 140 (S1021). Next, through the operation of the boot loader, the kernel stored in the first area 11 of the memory unit 140 is loaded (S1022). When the kernel is loaded, a root file system is operated (S1023).

When it is determined that the root file system is operated, the controller 150 checks whether or not the data stored in the second area 12 of the memory unit 140 is accessible (S103). The controller 150 first checks whether or not the second area 12 of the memory unit 140 is mounted (S104). That is, the controller 150 checks whether or not the file system area of the memory unit 140 is properly mounted.

When it is determined that the second area 12 of the memory unit 140 has been mounted (S104), the controller 150 determines whether or not accessibility information exists in the second area 12. For example, the controller 150 determines whether or not the metadata file corresponding to the file system of the second area 12 exists (S105). The presence or the absence of the metadata file can be determined by checking the file name of the metadata file. A file name of the metadata file may be stored in a predetermined memory.

When it is determined that the metadata file of the second area 12 exists, the controller 150 executes an application program (S106). That is, the controller 150 executes the application program stored in the first area 11, for controlling the signal input unit 110, the video processor 120 and the display unit 130.

In the meantime, when it is determined that the second area 12 of the memory unit 140 is not mounted or the metadata file does not exist in the second area 12, the controller 150 performs the file format corresponding to the file system for the second area 12 (S107), and then returns to the operation S106.

As described above, the present invention provides an electronic device and a control method thereof, which can improve the stability of operation.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An electronic device (100) comprising:
a memory unit (140) operable to store data and accessibility information indicative of whether the data is accessible; and
a controller (150) operable to determine whether the accessibility information is stored in the memory unit (140) and further operable to access the data if the accessibility information is determined to be stored in the memory unit (140).

2. The electronic device (100) according to claim 1, wherein the data is stored as a file in the memory unit (140) according to a file system.

3. The electronic device (100) according to claim 2, wherein the accessibility information comprises a metadata file corresponding to the file system.

4. The electronic device (100) according to claim 2 or 3, wherein the controller (150) is operable to perform a file format for the memory unit (140) when the memory unit (140) does not contain the accessibility information, wherein said format corresponds to the file system.

5. The electronic device (100) according to any preceding claim, wherein the memory unit (140) comprises a NAND flash memory.

6. The electronic device (100) according to any preceding claim, wherein the memory unit (140) comprises a readable and writable area in which the data and the accessibility information are stored.

7. The electronic device (100) according to any preceding claim, further comprising a video processor (120) operable to process video signals.

8. An electronic device (100), comprising:
a program storage unit (140) in which an application program is stored;
a file storage unit (140) having a file system area (12) in which a file associated with the application program is stored; and
a controller (150) operable to determine whether the file system area (12) is mounted to be accessible at the time of executing the application program, and further operable to execute the application program when the file system area (12) is determined to be mounted.

9. The electronic device (100) according to claim 8, wherein a file storage area (12) stores a metadata file corresponding to the file system, and
the controller (150) is operable to determine whether the metadata file exists in the file storage area (12), and further operable to execute the application program when the metadata file is determined to exist.

10. The electronic device (100) according to claim 9, wherein the controller (150) is operable to perform a file format for the file system area (12) when the file system area (12) is not mounted or when the metadata file does not exist.

11. The electronic device (100) according to claim 8, 9 or 10, wherein the file storage unit (140) comprises a NAND flash memory.

12. The electronic device (100) according to any of claims 8 to 11, wherein the file system area (12) is readable and writable.

13. The electronic device (100) according to any of claims 8 to 12, further comprising a video processor (120) operable to process video signals.

14. A method for controlling an electronic device (100), the device including a memory unit (140) to store data and accessibility information which shows whether the data is accessible, the method comprising:
determining whether the accessibility information exists in the memory unit (140) at the time of accessing the data; and
accessing the data if the accessibility information is determined to exist in the memory unit (140).

15. The method according to claim 14, wherein the data is stored as a file in the memory unit (140) according to a file system.

16. The control method according to claim 15, wherein the accessibility information comprises a metadata file corresponding to the file system.

17. The control method according to claim 15 or 16, further comprising performing a file format for the memory unit (140) when the accessibility information does not exist in the memory unit (140), wherein the file format corresponds to the file system.

18. The control method according to any of claims 14 to 17, wherein the memory unit (140) comprises a NAND flash memory.

19. The control method according to any of claims 14 to 18, wherein the memory unit (140) comprises a readable and writable area in which the data and the accessibility information are stored.

20. The control method according to any of claims 14 to 19, further comprising processing video signals.

21. A method for controlling an electronic device (100), the device including a program storage unit (140) to store an application program and a file storage unit (140) having a file system area (12) to store a file associated with the application program, the method comprising:
determining whether the file system area (12) is mounted to be accessible; and
executing the application program when the file system area (12) is determined to be mounted.

22. The method according to claim 21, wherein a file storing area (12) stores a metadata file of the file system area (12), the method further comprises:
determining whether the metadata file exists in the file storage unit (140), and
executing the application program comprises executing the application program if the metadata file is determined to exist.

23. The method according to claim 22, wherein the executing the application program comprises performing a file format for the file system area (12) when the file system area (12) has not been mounted or the metadata file does not exist in the file storing area (12).

24. The method according to claim 21, 22 or 23, wherein the file storage unit (140) comprises a NAND flash memory.

25. The method according to any of claims 21 to 24, wherein the file system area (12) is readable and writable.

26. The method according to any of claims 21 to 25, further comprising processing video signals.
